# EUROPÄISCHE PATENTSCHRIFT

(11) **EP 1 110 127 B1**
(45) Veröffentlichungstag und Bekanntmachung des Hinweises auf die Patenterteilung: **04.02.2004**
(21) Anmeldenummer: 99948653.3
(22) Anmeldetag: 19.07.1999
(51) Int. Cl.: G05B 17/02

(54) **INFORMATIONS-, BEDIEN- UND/ODER BEOBACHTUNGSSYSTEM MIT MODELLBASIERTER BENUTZEROBERFLÄCHE UND VERFAHREN ZUM MODELLBASIERTEN BEDIENEN UND/ODER BEOBACHTEN**
INFORMATION, CONTROL AND/OR OBSERVATION SYSTEM WITH MODEL-BASED USER INTERFACE AND METHOD FOR MODEL-BASED CONTROL AND/OR OBSERVATION
SYSTEME D'INFORMATION, DE COMMANDE ET/OU D'OBSERVATION AVEC INTERFACE UTILISATEUR MODELISEE ET PROCEDES DE COMMANDE ET/OU D'OBSERVATION MODELISEES

(30) Priorität: 30.07.1998 DE 19834456
(43) Veröffentlichungstag der Anmeldung: 27.06.2001
(73) Patentinhaber: SIEMENS AKTIENGESELLSCHAFT, 80333 München (DE)
(72) Erfinder: HAMADOU, Mehdi, D-91052 Erlangen (DE); HOFFMANN, Werner, D-91074 Herzogenaurach (DE); MEIXNER, Josef, D-91052 Erlangen (DE)
(86) Internationale Anmeldenummer: PCT/DE1999/002227
(87) Internationale Veröffentlichungsnummer: WO 2000/007079

(56) Entgegenhaltungen:
- EP-A- 0 549 504
- EP-A- 0 770 945
- WO-A-97/50021
- DE-A- 19 639 424
- US-A- 4 965 743
- LARSEN A K: "THE NEXT WEB WAVE: NETWORK MANAGEMENT" , DATA COMMUNICATIONS,US,MCGRAW HILL. NEW YORK, VOL. 25, NR. 1, PAGE(S) 31-32,34 XP000545237 ISSN: 0363-6399 das ganze Dokument
- PATENT ABSTRACTS OF JAPAN vol. 1998, no. 09, 31. Juli 1998 (1998-07-31) & JP 10 097550 A (RICOH CO LTD), 14. April 1998 (1998-04-14)

## Beschreibung

Die Erfindung betrifft ein Informations-, Bedien- und/oder Beobachtungssystem für eine aus mehreren Teilkomponenten aufgebaute reale Vorrichtung, insbesondere für eine Automatisierungsanlage.

Die Erfindung betrifft weiter ein Verfahren zum Bedienen und/oder Beobachten einer aus mehreren Teilkomponenten aufgebauten realen Vorrichtung.

Ein derartiges Informations-, Bedien- und/oder Beobachtungssystem kommt beispielsweise im Bereich der Automatisierungstechnik zum Einsatz. Dabei werden beispielsweise Prozeßdaten einer Automatisierungsanlage häufig mit speziellen Bedien- und Beobachtungssystemen dargestellt, während beispielsweise die Anwenderdokumentation häufig lediglich in Papierform vorliegt. Ein Anwender steht somit häufig vor der Problematik, für den Betrieb einer Automatisierungsanlage mit einer Vielzahl verschiedener Datenquellen ohne einheitliche Benutzeroberfläche konfrontiert zu sein.

Aus der DE 196 39 424 A ist ein Entwurfsverfahren für die Anlagentechnik und ein rechnergestütztes Projektierungssystem bekannt. Hierbei werden aus Modellen des Prozesses und der Leittechnik verfahrenstechnische Objekte gebildet, die in dem rechnergestützten Projektierungssystem verarbeitet werden, woraus ineinander verzahnte Modelle mit Steuerung und/oder Regelung und/oder Simulation einschließlich Störungsanalyse erzeugt werden.

Der Erfindung liegt die Aufgabe zugrunde, auch bei komplexen Vorrichtungen, beispielsweise bei Industrieanlagen eine Benutzeroberfläche mit einem unkomplizierten Zugriff auf Informationsdaten der Vorrichtung zur Verfügung stellen.

Diese Aufgabe wird durch System bzw. durch ein Verfahren mit den in den Ansprüchen 1 bzw. 5 angegebenen Merkmalen gelöst.

Durch ein derartiges Informations-, Bedien- und/oder Beobachtungssystem wird der Anwender somit in die Lage versetzt, über eine einheitliche Benutzeroberfläche auch komplexe Industrieanlagen überblicken und beherrschen zu können. Dies wird dadurch ermöglicht, dass in der Datenverarbeitungsvorrichtung ein Modell als Abbild der realen Vorrichtung existiert, das analog zu den physikalischen Zusammenhängen der Anlage aus virtuellen Komponenten aufgebaut ist. Durch diesen Aufbau aus technischen Komponenten entsteht eine Rahmenstruktur, in dem die entsprechenden Informationsdaten "eingehängt" werden können. Dem Benutzer gegenüber erscheinen die unterschiedlichen technischen Komponenten als verschiedene Sichten, auf denen die Informationen dargestellt werden. In den jeweiligen Sichten der Komponenten sind die Zugriffsdaten enthalten, über die der Anwender auf die verschiedenen Sichten und damit auf die verschiedenen virtuellen Komponenten der Gesamtvorrichtung zugreifen kann. Der Anwender kann somit über diese Querverweise, sogenannte Links, in der Anlage navigieren und gezielt auf die unterschiedlichsten Informationsdaten der verschiedenen Komponenten zugreifen. Bei einer entsprechenden Vernetzung der Automatisierungsanlage, beispielsweise über das Internet, können somit auch extern, d.h. außerhalb der Anlage gespeicherte Informationsdaten in die der Anlage zugeordneten Sichten eingebunden werden. Darüber hinaus wird auch ein Bedienen und Beobachten der Automatisierungsanlage von jedem beliebigen Standort aus möglich.

Ein gezieltes "Navigieren in einer Vorrichtung" wird dadurch weiter verbessert, dass das Modell eine virtuelle Vorrichtung als Abbild der realen Vorrichtung und virtuelle Teilkomponenten als Abbild realer Teilkomponenten aufweist, wobei die virtuelle Vorrichtung und die virtuellen Teilkomponenten als Daten und/oder als Datenverarbeitungsprogramme ausgebildet sind, die analog zu den physikalischen und/oder technischen Zusammenhängen der realen Vorrichtung miteinander verknüpft sind.

Auch bei komplexen Vorrichtungen mit einer Vielzahl von Einzelkomponenten und zugehörigen Informationsdaten wird die Übersichtlichkeit beispielsweise beim Bedienen und Beobachten dadurch gewährleistet, dass die Datenverarbeitungsprogramme jeweils über Querverweise innerhalb eines Programmrahmens eingeordnet sind, wobei der Programmrahmen und/oder die Querverweise zur Navigation eines Anwenders zum Zugriff auf die virtuelle Vorrichtung und/oder die virtuellen Teilkomponenten vorgesehen sind.

Eine aktive oder passive Kopplung mit der realen Vorrichtung und damit eine Steuerung der realen Vorrichtung kann auf einfache Weise dadurch erzielt werden, daß das System eine zwischen der Datenverarbeitungsvorrichtung und der realen Vorrichtung vorgesehene Verbindung und daß die Datenverarbeitungsvorrichtung eine Sende- und/oder Empfangskomponente zum Empfang und/oder zum Senden von Daten aufweist, wobei die Verbindung zwischen Steuerungsvorrichtung und realer Vorrichtung zur uni-/oder bidirektionalen Übertragung von Steuerungs- und Prozeßdaten vorgesehen ist. Hierdurch wird aus einem Informationssystem ein vollwertiges Bedien- und Beobachtungssystem.

Eine sehr benutzerfreundliche Handhabung des Systems auch ohne spezielle Kenntnisse wird dadurch unterstützt, daß die Informationsquellen in der Weise strukturiert sind, daß der virtuellen Vorrichtung jeweils technologisch abgrenzbare Teilkomponenten zugeordnet sind, und daß den Teilkomponenten jeweils weitere technologisch strukturierte Unterkomponenten zugeordnet sind, wobei die Zugriffsdaten zur Navigation des Anwenders durch die virtuelle Vorrichtung und die der virtuellen Vorrichtung zugehörige Teil- und Unterkomponenten vorgesehen sind.

Im folgenden wird die Erfindung anhand der in den Figuren dargestellten Ausführungsbeispiel näher beschrieben und erläutert.

Es zeigen:
- FIG 1: eine Prinzipdarstellung eines Informations-, Bedien- und Beobachtungssystems mit Darstellung der Informationsstrukturen,
- FIG 2: ein Ausführungsbeispiel eines Automatisierungssystems mit über Internet koppelbarer Benutzeroberfläche,
- FIG 3: eine Übersicht einer Modell- und Datenstruktur,
- FIG 4: eine Sicht einer Modellkomponente einer Spritzanlage TS 160,
- FIG 5: eine Sichten der Teilkomponente "Maschinensteuerung" der Spritzanlage TS 160,
- FIG 6a-e: weitere Sichten von Unterkomponenten der Teilkomponente "Maschinensteuerung" der Spritzanlage TS 160 und
- FIG 7: eine Prinzipdarstellung einer Modellbibliothek mit mehreren virtuellen Komponenten.

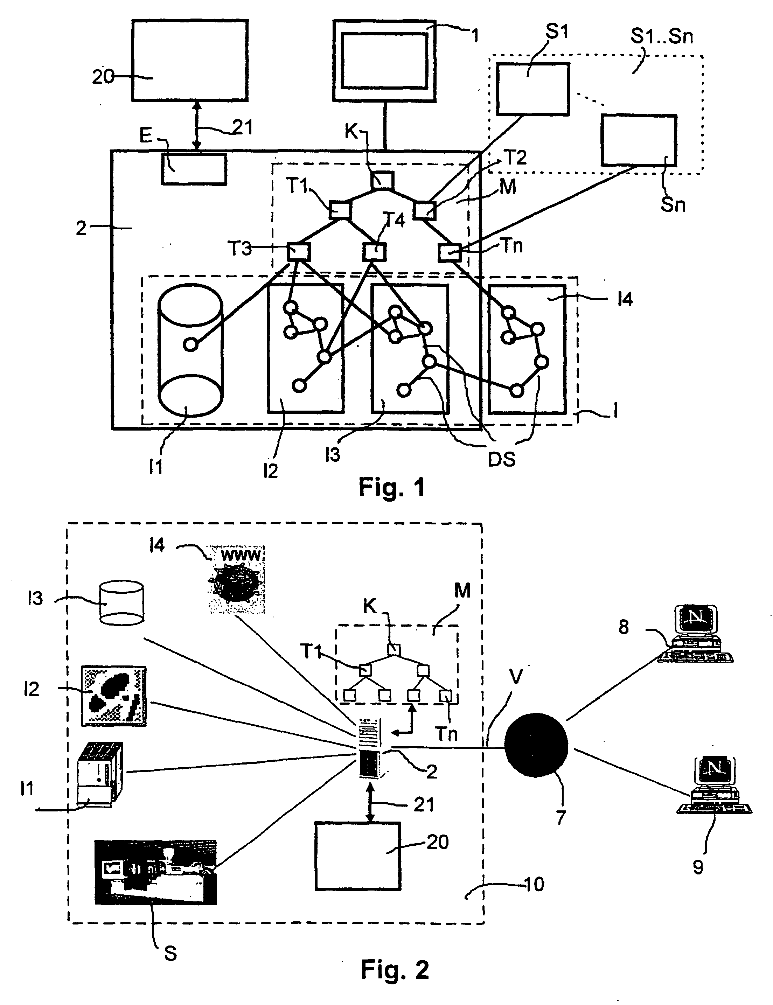

FIG 1 zeigt eine Prinzipdarstellung eines Informations-, Bedien- und/oder Beobachtungssystem. Das Informations-, Bedien- und/oder Beobachtungssystem besteht im wesentlichen aus einer Datenverarbeitungseinrichtung 2 mit angeschlossenem Monitor 1. Zwischen einer Sende-/Empfangseinrichtung E der Datenverarbeitungsvorrichtung 2 besteht eine Verbindung 21 zu einer Automatisierungsanlage 20, beispielsweise einer Spritzmaschine. In der Datenverarbeitungsvorrichtung 2 ist eine Modellstruktur M gespeichert, die ein aus virtuellen Komponenten bestehendes Modell als Abbild der realen Vorrichtung, d.h. der Automatisierungsanlage 20 darstellt. Die virtuelle Komponente K repräsentiert dabei die Automatisierungsanlage 20 in seiner Gesamtheit, während die virtuellen (Teil-)Komponenten T1..TN die realen Teilkomponenten der Gesamtanlage repräsentieren und analog zu den physikalisch-technischen Zusammenhänge der realen Anlage 20 verknüpft sind. Die virtuellen Komponenten K, T1..TN sind über eine Datenstruktur DS mit Informationsdaten I verknüpft, wobei die Informationsdaten I sowohl auf der lokal vorhandenen Datenverarbeitungseinrichtung 2 als auch auf jedem beliebigen mit der Datenverarbeitungseinrichtung 2 gekoppelten Rechner gespeichert sein können. Bei dem in FIG 1 dargestellten Ausführungsbeispiel handelt es sich bei den Informationsdaten I1..I3 um lokal gespeicherte Informationsdaten, während die Informationsdaten I4 über eine Internet-Anbindung auf jedem an das Internet angeschlossenen Rechner gespeichert sein können. Den virtuellen Komponenten K, T1..TN sind jeweils Sichten S1..SN zugeordnet, über die dem Anwender die Informationsdaten I1..I4 visualisiert werden. Die Sichten S1..SN enthalten darüber hinaus Zugriffsdaten zum Zugriff auf die den virtuellen Komponenten K, T1..TN zugeordneten lokal und/oder global angeordneten Informationsdaten I. Diese Verflechtung der Modellstruktur M, der Informationsdaten I1..I4 und der Sichten S1..Sn wird bei dem in Fig. 1 dargestellten Ausführungsbeispiel durch die vernetzte Datenstruktur DS symbolisiert.

Das in FIG 1 dargestellte Informations-, Bedien- und/oder Beobachtungssystem schafft für den Anwender somit eine Rahmenstruktur, die ihm sämtliche verfügbaren Informationsdaten I über die Anlage 20 auf einfache Weise zugänglich macht, ohne daß er sich in einer möglichen Flut von Informationsdaten verliert. Diese Rahmenstruktur wird durch die Zerlegung der Anlage in die virtuellen Komponenten K, T1..TN und die dem jeweiligen Komponenten zugeordneten Sichten S1..SN, die den Benutzer ein Navigieren in den verschiedensten Informationsquellen I1..I4 ermöglichen. Dabei spielt es keine Rolle, wo die entsprechenden Informationsdaten I1..I4 abgelegt sind. Die Zuordnung der Informationsdaten I1..I4 ist somit im Gegensatz zu bekannten, beispielsweise auf einem CD-ROM-Speicher gespeicherten, Betriebsdaten nicht statisch, sondern vielmehr dynamisch. Die Informationsdaten I1..I4 sind jeweils auf dem neuesten Stand und können beispielsweise Produktänderungen einzelner technischer Komponenten Rechnung tragen. Neben einer ausführlichen Datenübersicht, die beispielsweise auch die Funktion einer Bedienungsanleitung übernehmen kann, stehen dem Anwender auch für sämtliche sonstigen Bedien- und Beobachtungsaktionen einheitliche Benutzeroberflächen in Form der verschiedenen Sichten S1..SN zur Verfügung. Durch die feste Datenstruktur DS der virtuellen Komponenten K, T1..Tn ist auch sichergestellt, daß sich der Anwender in der Verknüpfung der unterschiedlichsten Informationsdaten I1..I4 nicht verlieren kann. Das in FIG 1 dargestellte Ausführungsbeispiel stellt lediglich eine grobe Prinzipdarstellung des erfindungsgemäßen Informations-, Bedien- und Beobachtungssytems dar, welches durch eine Vielzahl von Varianten abgeändert werden kann. So ist das System auch lediglich als reines Dokumentationssystem einsetzbar, wobei in diesem Fall zwischen der Anlage 20 und dem Informationssystem keine Verbindungsleitung 21 erforderlich ist. Auch in diesem Fall ist das Informationssystem dynamisch veränderbar, d.h. die Dokumentation kann durch Zuweisung neuer Links oder des Up-Dates bereits bestehender Komponenten laufend an den jeweils aktuellen Status angepaßt werden.

FIG 2 zeigt ein Ausführungsbeispiel eines Automatisierungssystems 10. Das Automatisierungssystem 10 ist über eine Verbindung V mit dem Internet 7 gekoppelt. Über das Internet 7 und die Verbindung V ist die Automatisierungsanlage 10 mit Rechnern 8, 9 koppelbar. Das Automatisierungssystem 10 beinhaltet weiter die reale Anlage 20, die über eine Verbindungsleitung 21 mit einer Datenverarbeitungsvorrichtung 2 gekoppelt ist. Die Datenverarbeitungsvorrichtung 2 enthält, wie bereits im Zusammenhang mit FIG 1 erläutert, ein Modell M, in das verschiedene Informationsdaten I1, I2, I3, I4 als virtuelle Komponenten K, T1..Tn eingehängt sind. Die Informationsdaten I1, I2 betreffen beispielsweise virtuelle Teilkomponenten als Abbild von Steuerungsvorrichtungen der Anlage 20, während die Informationsdaten I3 beispielsweise eine Bedienungsanleitung oder eine technische Dokumentation und die Informationsdaten I4 im Internet verfügbare Informationsquellen betreffen.

Mit Hilfe des in FIG 2 dargestellten Ausführungsbeispiels, bei dem die Datenverarbeitungseinrichtung 2 eine Internet-Verbindung V aufweist, ist veranschaulicht, daß von jedem beliebigen Rechner 8, 9 aus via Internet ein Zugang zum Informations-, Bedien- und/oder Beobachtungssystem der Automatisierungsanlage 20 ermöglicht wird. Im Gegenzug ist über die Internet-Anbindung 7 weiter ermöglicht, daß auch Informationsdaten I4, die sich im WWW (World Wide Web) befinden, zugegriffen werden kann. Über einen beispielsweise als Zentrale ausgebildeten Rechner 8 kann beispielsweise eine Fernwartung der Automatisierungsanlage 20 durchgeführt werden, während ein Manager im Normalbetrieb beispielsweise über den Rechner 9 auf die Anlage 20 zugreifen kann.

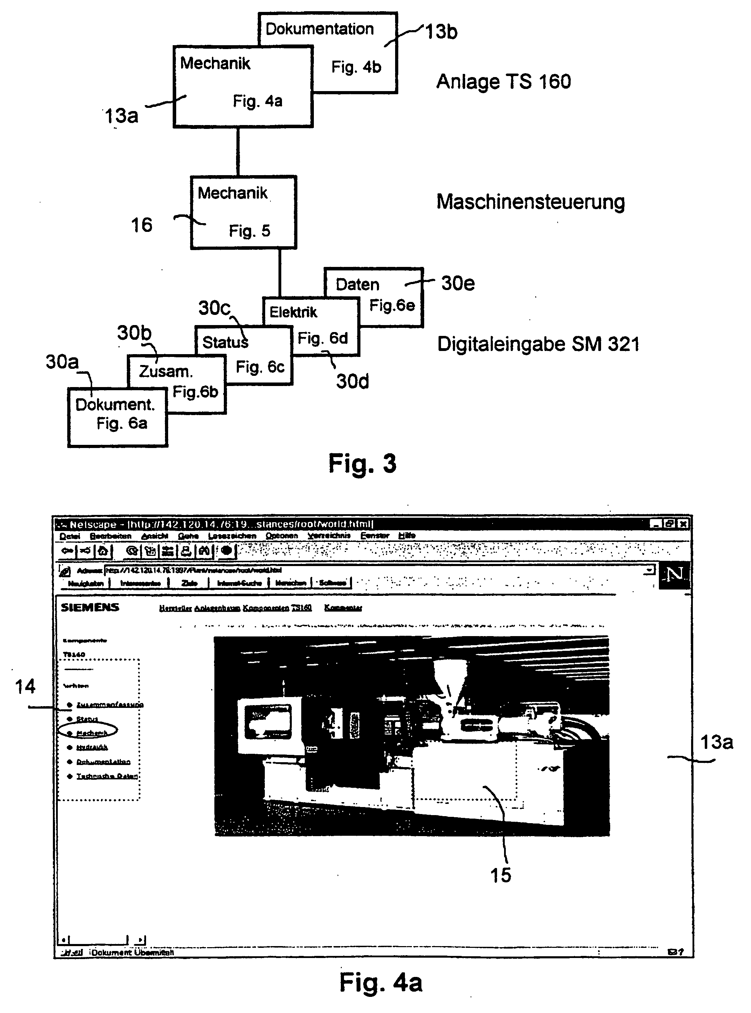

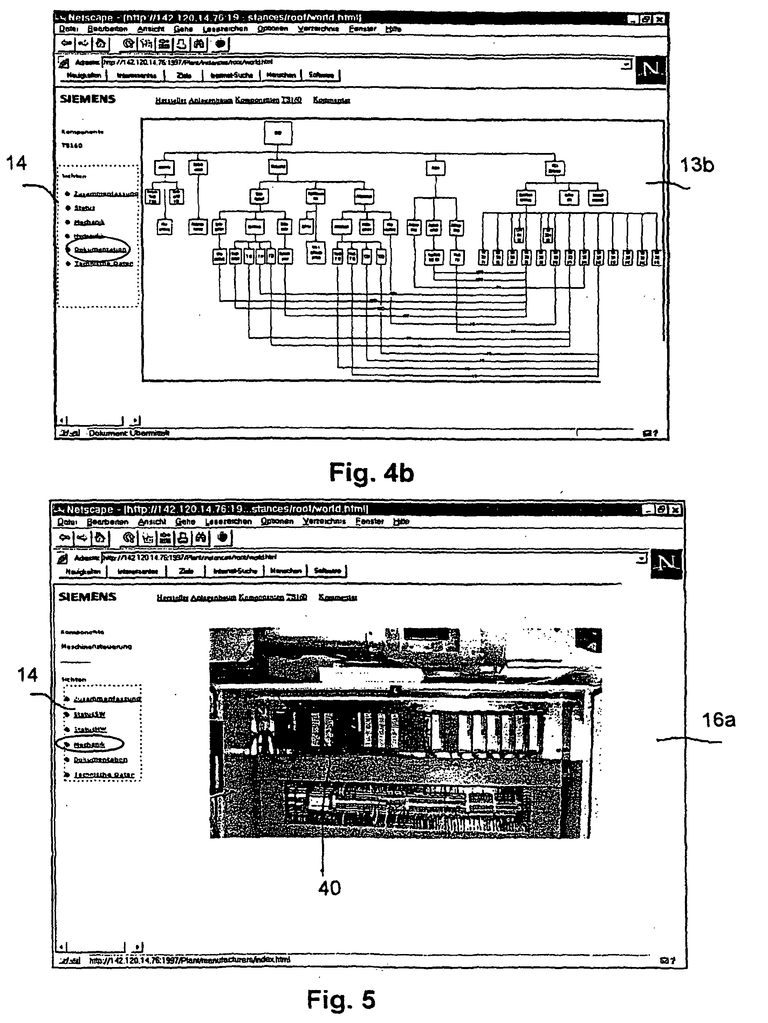

FIG 3 zeigt eine Übersicht einer Modell- und Datenstruktur, wie sie bei dem in den FIG 4a, 4b, FIG 5a,b und FIG 6a..6e gezeigten Sichten der Teilkomponenten einer Anlage TS 160 verwendet werden kann. Im jeweiligen Block ist zur besseren Übersicht der Zuordnung im unteren rechten Bereich die jeweils zugeordnete Figur angegeben. Die Datenstruktur des in FIG 3 dargestellten Ausführungsbeispiels enthält zwei übergeordnete Sichten 13a, 13b. Die Sicht 13a enthält das in FIG 4a dargestellte Übersichtsbild der Anlage TS 160 als virtuelle Komponente, während die Sicht 13b die in FIG 4b dargestellte Dokumentationssicht der Automatisierungsanlage enthält. Den Sichten 13a, 13b ist eine weitere Sicht 16 mit Informationsdaten zur Maschinensteuerung als Teilkomponente der Gesamtanlage untergeordnet. Die Sicht 16 zeigt eine bildliche Darstellung der Maschinensteuerung. In gleicher Weise sind der Sicht 16 weitere virtuelle Komponenten 30a..30e zugeordnet. Die Sicht 30a kennzeichnet die Dokumentation zu einem Einzelbaustein der Maschinensteuerung, während die weiteren Sichten 30b..30e die Informationsdaten "Zusammenfassung", "Status", "Elektrik" sowie "technische Daten" kennzeichnen.

FIG 3 zeigt ein Beispiel der in den FIG 4a, 4b, Fig. 5 sowie FIG 6a..6e gezeigten Sichten als Ausführungsbeispiel einer modellbasierten Datenstruktur von virtuellen Komponenten, die es einem Anwender für Informations-, Bedien- und/oder Beobachtungszwecke ermöglichen, in den unterschiedlichsten Sichten der Anlage zu navigieren.

FIG 4a zeigt eine erste Sicht 13a einer Anlage TS 160. Die Sicht 13a zeigt eine digitale Bildaufnahme als Abbild der Anlage TS 160. Am linken Bildschirmrand des in FIG 4a dargestellten Bildschirmausschnitts befindet sich eine Menüleiste 14, die die jeweils verfügbaren Sichten der Anlage TS 160 kennzeichnet. In FIG 4a ist dabei die Mechanik der Anlage TS 160 gezeigt. Weitere verfügbare Sichten betreffen Informationen zu "Zusammenfassung", "Status", "Mechanik", "Hydraulik", "technische Daten". Durch Auswahl der jeweiligen Menüpunkte des Menüs 14 kann der Anwender von der Sicht 13a zu weiteren verfügbaren Sichten innerhalb der vorgegebenen Modellstruktur gelangen. Als weitere Selektionsmöglichkeit kann der Anwender in der Sicht 13a der Anlage TS 160 bestimmte Einzelkomponenten, beispielsweise mit Hilfe der Maus auf dem Bildschirm gezielt auswählen. So ist als Beispiel ein Bereich 15 markiert, welcher die Maschinensteuerung der Anlage TS 160 enthält. Mittels Selektion dieses Bildschirmbereichs 15, beispielsweise durch die Maus kann der Anwender eine dieser virtuellen Komponente zugeordnete Sicht aktivieren.

FIG 5 zeigt eine derartige aktivierte Sicht der Mechanik der Maschinensteuerung, wie sie im Bildschirmbereich 15 der in FIG 4a dargestellten Sicht 13a enthalten ist. Der Anwender kann wiederum innerhalb des Menüs 14 verschiedene Sichten der Maschinensteuerung auswählen oder er kann durch Selektion bestimmter Teilbereiche der dargestellten Maschinensteuerung, beispielsweise durch Selektion eines Bildschirmbereichs 40 Einzelkomponenten der Maschinensteuerung als separate Sichten aktivieren. Durch Auswahl des Bereichs 40 gelangt der Anwender zu einer weiteren virtuellen Teilkomponente innerhalb des vorgegebenen Modells, nämlich zur Digitaleingabe SM 321.

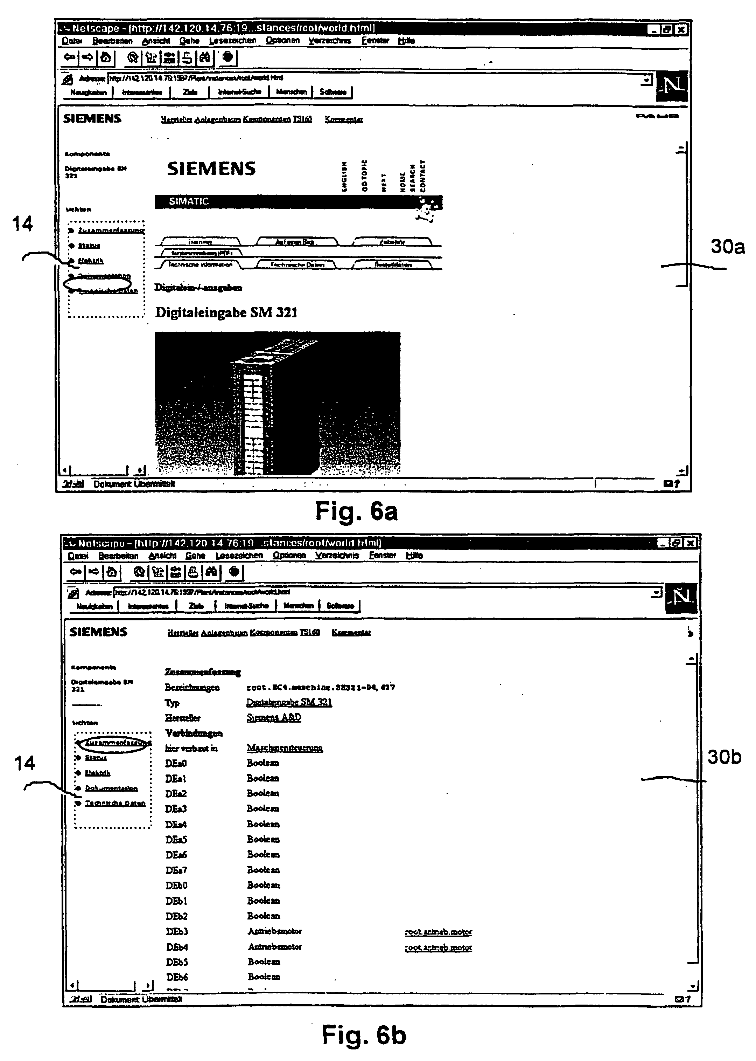

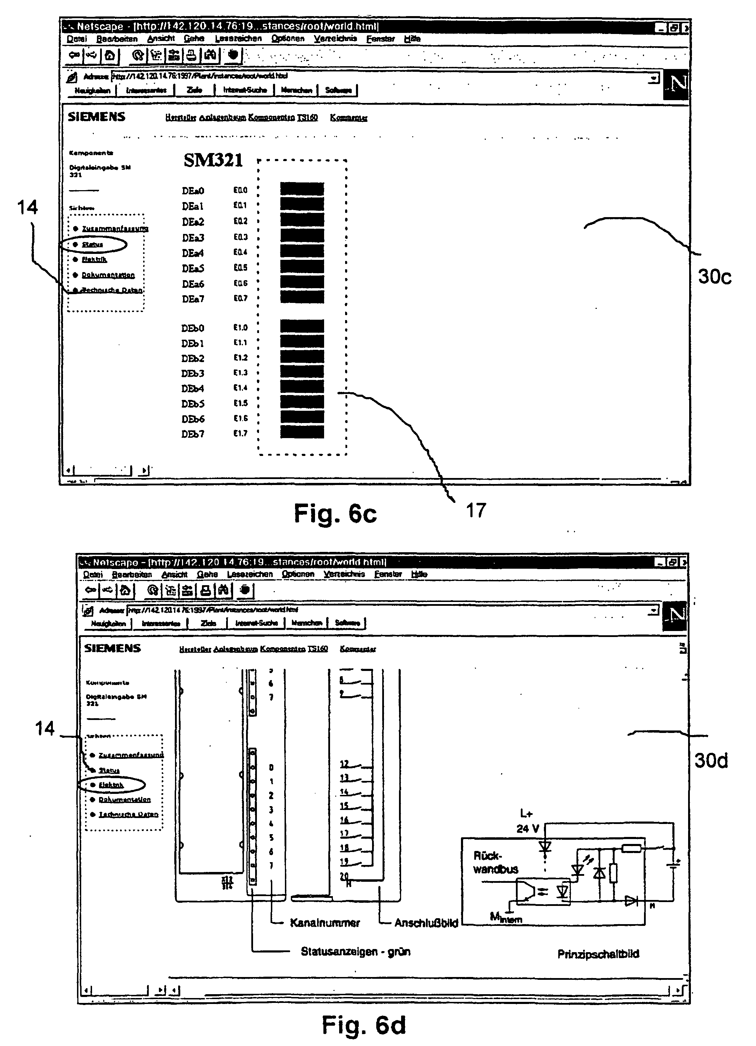

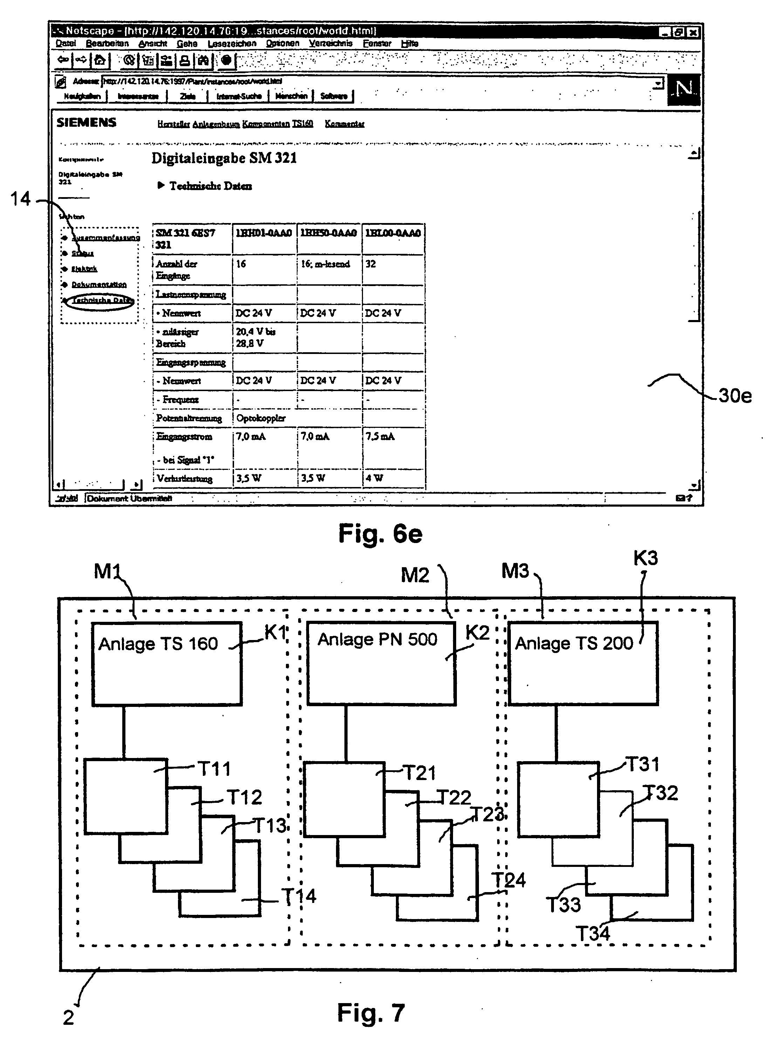

Die FIG 6a-6e zeigen jeweils Sichten (30a..30e) zu einer Einzelkomponente der Maschinensteuerung, nämlich zur Digitaleingabe SM 321 bezüglich Dokumentation (Fig. 6a), Zusammenfassung(Fig. 6b), Status (Fig. 6c), Elektrik (Fig. 6d) und Technische Daten (Fig. 6e). Die den Status der Digitaleingabe kennzeichnende Sicht 30c weist ein Statusdatenfeld 17 auf, in dem zum Zwecke des Bedienen und Beobachtens aktuelle Prozeßdaten der Digitaleingabe abgefragt und/oder vorgegeben werden können.

Das Besondere des gezeigten Informations-, Bedien- und Beobachtungssystems liegt darin, bekannte Navigationsmechanismen auf den Zusammenhang einer Benutzeroberfläche für eine Industrieanlage zu übertragen und somit eine Datenstruktur zu schaffen, die sämtliche verfügbaren Datenquellen benutzerfreundlich miteinander verbindet. Die Anlage wird auf Basis bekannter Internet-Techniken durch einzelne Komponenten beschrieben.

FIG 7 zeigt eine Prinzipdarstellung einer Anlagenbibliothek, die aus mehreren einzelne Modellen M1..M3 als Abbild einer ersten Anlage TS 160, einer zweiten Anlage PN 500 und einer dritten Anlage TS 200 aufgebaut ist. Die Anlagenbibliothek der Modelle M1, M2, M3 ist auf einer Datenverarbeitungsvorrichtung 2 gespeichert. Die Modellbibliothek besteht aus der Modellbibliothek M1, die eine virtuelle Komponente K1 und virtuelle Teilkomponenten T11..T14 zur ersten Anlage TS 160, eine virtuelle Komponente K2 und virtuelle Teilkomponenten T21..T24 zur zweiten Anlage PN 500 sowie eine virtuelle Komponente K3 und virtuelle Teilkomponenten T31..T34 zur dritten Anlage TS 200 aufweist. Der Komponente K1 der ersten Anlage TS 160 sind in Form der Teilkomponenten T11..T14 Informationsdaten zugeordnet, die verschiedene Sichten auf die einzelnen virtuellen Komponenten der Anlage TS 160 als Abbild der realen Anlage TS 160 darstellen. In gleicher Weise sind der virtuellen Komponente K2 der zweiten Anlage PN 500 in Form der virtuellen Teilkomponenten T21..T24 Informationsdaten untergeordneter virtueller Subkomponenten sowie der dritten Anlage TS 200 Informationsdaten weiterer virtueller Teilkomponenten T31..T34 zugeordnet.

Mit Hilfe des in FIG 7 dargestellten Blockschaltbilds soll der prinzipielle Datenaufbau der Modelle M1..M3 und der Aufbau der Informationsdaten veranschaulicht werden. Wichtig dabei ist, daß mit Hilfe der Datenverarbeitungsvorrichtung 2 für die Informationsdaten eine einheitliche Benutzeroberfläche geschaffen wird, mit Hilfe der auf die virtuellen Komponenten K1..K3 sowie deren Subkomponenten T11..T14, T21..T24, T31..T34 zugegriffen werden kann. Das Blockschaltbild in FIG 7 versteht sich dabei lediglich als schematisches Beispiel. So sind auch Ausführungsbeispiele denkbar, bei denen den einzelnen Komponenten K1..K2 eine beliebige Anzahl von Unterverzweigungen weiterer Komponenten zugeordnet ist, deren Modellstrukturen auch untereinander vernetzt sein können.

Zusammenfassend betrifft die Erfindung somit ein System 1, 2 und Verfahren zur dynamischen Verwaltung von Informationsdaten als Informationsquellen I einer aus mehreren virtuellen Teilkomponenten T1..Tn bestehenden virtuellen Vorrichtung K. Die virtuelle Vorrichtung K ist das Abbild einer realen Vorrichtung 20, beispielsweise einer Industrieanlage. Ein umfassender Überblick über die Gesamtvorrichtung sowie ein zielgerichteter Einblick in die Teilkomponenten der Vorrichtung wird dadurch ermöglicht, daß die virtuellen Teilkomponenten entsprechend den technologischen Strukturen als Programme in einer vernetzten Rahmenstruktur eingebettet sind. Das System weist eine Datenverarbeitungsvorrichtung 2 zur Verwaltung der der virtuellen Vorrichtung K zugeordneten Informationsdaten I und zur Steuerung des Zugriffs auf die Informationsdaten I auf. Der virtuellen Vorrichtung K sowie deren virtuellen Teilkomponenten T1..Tn sind Adressen zugeordnet, die als lokale und/oder als globale Adressen ausgebildet sind und ein komponenten- und modellbasieretes Navigieren auf unterschiedlichen Sichten S1..Sn der Anlage ermöglichen.

## Patentansprüche

1. Informations-, Bedien- und/oder Beobachtungssystem (1, 2) für eine aus mehreren Teilkomponenten aufgebaute reale Vorrichtung (20), insbesondere für eine Automatisierungsanlage, mit einer Datenverarbeitungsvorrichtung (2),
• die ein aus virtuellen Komponenten (K, Tl..Tn) bestehendes Modell (M) als Abbild der realen Vorrichtung (20) und den virtuellen Komponenten (K, T1..Tn) zugeordnete Sichten (S1..Sn) zur Visualisierung von in lokal (I1..I3) auf der Datenverarbeitungsvorrichtung (2) und/oder auf einem mit der Datenverarbeitungseinrichtung (2) gekoppelten Rechner gespeicherten Informationsdaten (I) der Komponenten (K, T1..Tn) aufweist,
• wobei das Modell (M) eine in der Datenverarbeitungsvorrichtung (2) gespeicherte Modellstruktur (DS) aufweist, die aus einer Verknüpfung der virtuellen Komponenten (K, T1..Tn) analog zu den Zusammenhängen der realen Vorrichtung (20) gebildet wird,
• wobei die Komponenten (K, T1..Tn) und/oder die Sichten (S1..Sn) Zugriffsdaten zum Zugriff auf die Informationsdaten (I) aufweisen,
• wobei zwischen der Datenverarbeitungsvorrichtung (2) und der realen Vorrichtung (20) eine Verbindung (21) vorgesehen ist und wobei die Datenverarbeitungsvorrichtung (2) eine Sende- und/oder. Empfangskomponente (E) zum Empfang und/oder zum Senden von Daten aufweist, wobei die Verbindung (21) zwischen Datenverarbeitungsvorrichtung (2) und realer Vorrichtung (20) zur uni-/oder bidirektionalen Übertragung von Steuerungs- und Prozeßdaten vorgesehen ist.

2. System nach Anspruch 1,
**dadurch gekennzeichnet,**
**dass** das Modell (M) eine virtuelle Vorrichtung (K) als Abbild der realen Vorrichtung (20) und virtuelle Teilkomponenten (T1..Tn) als Abbild realer Teilkomponenten aufweist, wobei die virtuelle Vorrichtung (K) und die virtuellen Teilkomponenten (T1..Tn) als Daten und/oder als Datenverarbeitungsprogramme ausgebildet sind, die analog zu den physikalischen und/oder technischen Zusammenhängen der realen Vorrichtung (20) miteinander verknüpft sind.

3. System nach Anspruch 2,
**dadurch gekennzeichnet,**
**dass** die Datenverarbeitungsprogramme jeweils über Querverweise innerhalb eines Programmrahmens eingeordnet sind, wobei der Programmrahmen und/oder die Querverweise zur Navigation eines Anwenders zum Zugriff auf die virtuelle Vorrichtung (K) und/oder die virtuellen Teilkomponenten (T1..Tn) vorgesehen sind.

4. System nach einem der Ansprüche 2 oder 3,
**dadurch gekennzeichnet,**
**dass** der virtuellen Vorrichtung (K) jeweils technologisch abgrenzbare Teilkomponenten (T1..Tn) zugeordnet sind, und dass den Teilkomponenten (T1..Tn) jeweils weitere technologisch strukturierte Unterkomponenten zugeordnet sind, wobei die Zugriffsdaten zur Navigation eines Anwenders durch die virtuelle Vorrichtung (K) und die der virtuellen Vorrichtung (A) zugehörige Teil- und Unterkomponenten (T1..Tn) vorgesehen sind.

5. Verfahren zur Information, zum Bedienen und/oder zum Beobachten einer aus mehreren Teilkomponenten aufgebauten realen Vorrichtung (20), insbesondere einer Automatisierungsanlage,
• bei dem ein aus virtuellen Komponenten (K, T1..Tn) bestehendes Modell (M) als Abbild der realen Vorrichtung (20) vorgesehen ist und bei dem den virtuellen Komponenten (K, T1..Tn) jeweils Sichten (S1..Sn) zugeordnet sind, über die dem Anwender lokal (I1..I3) auf der Datenverarbeitungsvorrichtung (2) und/oder auf einem mit der Datenverarbeitungseinrichtung (2) gekoppelten Rechner gespeicherte Informationsdaten (I) der Komponenten (K, T1..Tn) visualisiert werden,
• bei dem der Anwender über den virtuellen Komponenten (K, T1..Tn) und/oder den Sichten (S1..Sn) zugeordnete Zugriffsdaten auf die Informationsdaten (I) zugreift,
• bei dem zwischen der Datenverarbeitungsvorrichtung (2) und der realen Vorrichtung (20) eine Verbindung (21) vorgesehen ist und bei dem die Datenverarbeitungsvorrichtung (2) eine Sende- und/oder Empfangskomponente (E) zum Empfang und/oder zum Senden von Daten aufweist, wobei über die Verbindung (21) zwischen Datenverarbeitungsvorrichtung (2) und realer Vorrichtung (20) uni-/oder bidirektional Steuerungs- und Prozeßdaten übertragen werden.

6. Verfahren nach einem der Ansprüche 4 oder 5,
**dadurch gekennzeichnet,**
**dass** den Sichten (S1..Sn) der Anlage jeweils eine Menüleiste (14) zugeordnet ist, über die dem Anwender eine Zugriffsmöglichkeit auf jeweils verfügbare weitere Sichten (S1..Sn) angezeigt wird.

7. Verfahren nach einem der Ansprüche 4 bis 6,
**dadurch gekennzeichnet,**
**dass** über eine zwischen der Datenverarbeitungsvorrichtung (2) und der realen Vorrichtung (20) bestehende Verbindung (21) Daten, insbesondere Betriebs- und/oder Steuerdaten übertragen werden.

8. Verfahren nach einem der Ansprüche 4 bis 7,
**dadurch gekennzeichnet,**
**dass** bei einer bildlichen Darstellung einer Vorrichtung (20 durch Auswahl eines Teilbereichs (15, 40), der eine virtuelle Teilkomponente (T1..Tn) repräsentiert, die virtuelle Teilkomponente (T1..Tn) als Sicht aktiviert wird.

## Claims

1. Information, operation and/or monitoring system (1, 2) for a real device (20), which includes several subcomponents, in particular for an automation system, with a data processing device (2),
• having a model (M) consisting of virtual components (K, T1..Tn) representing the real device (20) and views (S1..Sn) associated with the virtual components (K, T1..Tn) for presentation of information data (I) of the components (K, T1..Tn) stored locally (I1..I3) on the data processing device (2) and/or on a computer linked to the data processing device (2),
• the model (M) having a model structure (DS) stored in the data processing device (2), said model structure (DS) being formed from a linkage of the virtual components (K, T1..Tn) analogously to the relationships of the real device (20),
• the components (K, T1..Tn) and/or the views (S1..Sn) having access data for accessing the information data (I),
• a connection (21) being provided between the data processing device (2) and the real device (20), and the data processing device (2) having a transmission and/or receiving component (E) for receiving and/or transmitting data, the connection (21) between data processing device (2) and real device (20) being provided for unidirectional or bidirectional transmission of control and process data.

2. System according to Claim 1, **characterised in that** the model (M) has a virtual device (K) representing the real device (20) and virtual subcomponents (T1..Tn) representing real subcomponents, the virtual device (K) and the virtual subcomponents (T1..Tn) being designed as data and/or data processing programs, which are linked together analogously to the physical and/or technical relationships of the real device (20).

3. System according to Claim 2, **characterised in that** the data processing programs are respectively embedded in a program frame via cross-references, the program frame and/or the cross-references being provided to permit navigation by a user to access the virtual device (K) and/or the virtual subcomponents (T1..Tn).

4. System according to one of Claims 2 or 3, **characterised in that** technologically different subcomponents (T1..Tn) are respectively assigned to the virtual device (K), and that further technologically structured subcomponents are respectively assigned to the subcomponents (T1..Tn), the access data being provided for navigation by a user through the virtual device (K) and the subcomponents and subordinate components (T1..Tn) assigned to the virtual device (A).

5. Method for information, operation and/or monitoring a real device (20), which includes several subcomponents, in particular an automation system,
• in which a model (M) consisting of virtual components (K, T1..Tn) is provided as a representation of the real device (20) and in which views (S1..Sn) are respectively assigned to the virtual components (K, T1..Tn), via which information data (I) of the components (K, T1..Tn) stored locally (I1..I3) on the data processing device (2) and/or on a computer linked to the data processing device (2), is displayed to the user,
• in which the user accesses information data (I) via the virtual components (K, T1..Tn) and/or the access data assigned to the views (S1..Sn),
• in which a connection (21) is provided between the data processing device (2) and the real device (20), and in which the data processing device (2) has a transmission and/or receiving component (E) for receiving and/or transmitting data, the connection (21) between data processing device (2) and real device (20) being provided for unidirectional or bidirectional transmission of control and process data.

6. Method according to one of Claims 4 or 5, **characterised in that** a menu bar (14) is respectively associated with the views (S1..Sn) of the system, via which menu bar an option to access respective further available views (S1..Sn) is displayed to the user.

7. Method according to one of Claims 4 to 6, **characterised in that** data, in particular operational and/or control data, is transferred via a connection (21) existing between the data processing device (2) and the real device (20).

8. Method according to one of Claims 4 to 7, **characterised in that** in the case of a pictorial representation of a device (20) by selection of a subarea (15, 40), which represents a virtual subcomponent (T1..Tn), the virtual subcomponent (T1..Tn) is activated as a view.

## Revendications

1. Système d'information, de commande et/ou d'observation (1, 2) pour un dispositif réel (20) constitué de plusieurs éléments, notamment pour une installation automatisée, avec un dispositif de traitement de données (2),
• qui comporte un modèle (M) constitué d'éléments virtuels (K, T1 à Tn) comme image du dispositif réel (20) et des vues (S1 à Sn) associées aux éléments virtuels (K, T1 à Tn) pour la visualisation de données informationnelles (I) des éléments (K, T1 à Tn) qui sont mémorisées localement (I1 à I3) sur le dispositif de traitement de données (2) et/ou sur un ordinateur relié au dispositif de traitement de données (2),
• le modèle (M) comportant une structure de modèle (DS) qui est mémorisée dans le dispositif de traitement de données (2) et qui est formée d'une combinaison des éléments virtuels (K, T1 à Tn) de manière analogue aux relations du dispositif réel (20),
• les éléments (K, T1 à Tn) et/ou les vues (S1 à Sn) comportant des données d'accès pour l'accès aux données informationnelles (I),
• une liaison (21) étant prévue entre le dispositif de traitement de données (2) et le dispositif réel (20) et le dispositif de traitement de données (2) comportant un élément d'émission/réception (E) pour la réception et/ou l'émission de données, la liaison (21) entre le dispositif de traitement de données (2) et le dispositif réel (20) étant prévue pour la transmission uni- ou bidirectionnelle de données de commande et de processus.

2. Système selon la revendication 1,
**caractérisé par le fait que** le modèle (M) comporte un dispositif virtuel (K) comme image du dispositif réel (20) et des éléments virtuels (T1 à Tn) comme image d'éléments réels, le dispositif virtuel (K) et les éléments virtuels (T1 à Tn) étant conçus comme des données et/ou comme des programmes de traitement de données qui sont combinés entre eux de manière analogue aux relations physiques et/ou techniques du dispositif réel (20).

3. Système selon la revendication 2,
**caractérisé par le fait que** les programmes de traitement de données sont ordonnés à chaque fois par l'intermédiaire de renvois transversaux ou liens à l'intérieur d'un cadre de programme, le cadre de programme et/ou les liens étant prévus pour la navigation d'un utilisateur pour accéder au dispositif virtuel (K) et/ou aux éléments virtuels (T1 à Tn).

4. Système selon l'une des revendications 2 ou 3,
**caractérisé par le fait que** des éléments pouvant être délimités au niveau technologique (T1 à Tn) sont associés au dispositif virtuel (K) et que d'autres sous-éléments structurés au niveau technologique sont associés aux éléments (T1 à Tn), les données d'accès étant prévues pour la navigation d'un utilisateur à travers le dispositif virtuel (K) et les éléments et sous-éléments (T1 à Tn) appartenant au dispositif virtuel (A).

5. Procédé pour l'information, la commande et/ou l'observation d'un dispositif réel (20) constitué de plusieurs éléments, notamment d'une installation automatisée,
• dans lequel un modèle (M) constitué d'éléments virtuels (K, T1 à Tn) est prévu comme image du dispositif réel (20) et dans lequel il est associé aux éléments virtuels (K, T1 à Tn) des vues (S1 à Sn) par l'intermédiaire desquelles l'utilisateur peut visualiser des données informationnelles (I) des éléments (K, T1 à Tn) qui sont mémorisées localement (I1 à I3) sur le dispositif de traitement de données (2) et/ou sur un ordinateur relié au dispositif de traitement de données (2),
• dans lequel l'utilisateur accède aux données informationnelles (I) par l'intermédiaire de données d'accès associées aux éléments virtuels (K, T1 à Tn) et/ou aux vues (S1 à Sn),
• dans lequel une liaison (21) est prévue entre le dispositif de traitement de données (2) et le dispositif réel (20) et dans lequel le dispositif de traitement de données (2) comporte un élément d'émission/réception (E) pour la réception et/ou l'émission de données, la liaison (21) entre le dispositif de traitement de données (2) et le dispositif réel (20) étant prévue pour la transmission uni- ou bidirectionnelle de données de commande et de processus.

6. Procédé selon l'une des revendications 4 ou 5,
**caractérisé par le fait qu'**il est associé aux vues (S1 à Sn) de l'installation une barre de menu (14) par l'intermédiaire de laquelle une possibilité d'accès à d'autres vues disponibles (S1 à Sn) est indiquée à l'utilisateur.

7. Procédé selon l'une des revendications 4 à 6,
**caractérisé par le fait que** des données, notamment des données d'exploitation et/ou de commande, sont transmises par l'intermédiaire d'une liaison (21) existant entre le dispositif de traitement de données (2) et le dispositif réel (20).

8. Procédé selon l'une des revendications 4 à 7,
**caractérisé par le fait que**, lors d'une représentation par l'image d'un dispositif (20), en sélectionnant une sous-zone (15, 40) qui représente un élément virtuel (T1 à Tn), on active l'élément virtuel (T1 à Tn) comme vue.
